# EUROPÄISCHE PATENTSCHRIFT

(11) **EP 0 648 458 B1**
(45) Veröffentlichungstag und Bekanntmachung des Hinweises auf die Patenterteilung: **04.12.1996**
(21) Anmeldenummer: 94115259.7
(22) Anmeldetag: 28.09.1994
(51) Int. Cl.: A47J 36/02, A47J 27/00

(54) **Kochgeschirr mit einer Aluminiumbodenplatte**
Cooking vessel with an aluminium base plate
Récipient de cuisson avec une plaque de base en aluminium

(30) Priorität: 14.10.1993 DE 9315661 U
(43) Veröffentlichungstag der Anmeldung: 19.04.1995
(73) Patentinhaber: Firma Alfred Herzog, D-58540 Meinerzhagen (DE)
(72) Erfinder: Turck, Klaus Peter, D-58509 Lüdenscheid (DE)
(74) Vertreter: Hassler, Werner, Dr.

(56) Entgegenhaltungen:
- EP-A- 0 111 867
- EP-A- 0 509 860
- EP-A- 0 534 202
- WO-A-88/03379
- DE-A- 3 713 660
- GB-A- 2 014 037
- US-A- 4 614 852

## Beschreibung

Die Erfindung betrifft ein Kochgeschirr mit einer Aluminiumbodenplatte und einem ferromagnetischen, durch ein Induktionsfeld erhitzbaren Einsatz im Boden.

Das Kochgeschirr ist als Kochtopf, Kasserole, Pfanne, Bratgeschirr oder dergleichen ausgebildet. Das Kochgeschirr kann aus Aluminium bestellen. Das Kochgeschirr aus einem anderen Werkstoff kann auch mit einer Aluminiumbodenplatte zur Verbesserung der Heizwirkung ausgestattet sein. Diese Aluminiumbodenplatte ist für einen guten und schnellen Wärmeübergang wichtig.

Für Induktionsheizfelder sind solche Kochgeschirre mit Aluminiumbodenplatte unbrauchbar, weil das magnetische Induktionsfeld in den Aluminiumwerkstoff nicht eindringen kann. Die WO 88/03 379 beschreibt eine ferromagnetische Platte als Einsatz im Bodenbereich. Hier muß weitgehend auf die vorteilhafte Wirkung einer Aluminiumbodenplatte verzichtet werden.

Die DE-A-3713660 beschreibt ein Kochgeschirr gemäß dem Oberbegriff des Anspruchs 1, bei dem beim Guß ein plattenförmiger Einsatz aus ferromagnetischem Werkstoff in die Aluminiumbodenplatte eingeformt ist. Infolge der unterschiedlichen thermischen Eigenschaften des ferromagnetischen Werkstoffes und des Aluminiums sind für die Einbettung besondere Gestaltungen notwendig.

Aufgabe der Erfindung ist eine genaue Ausrichtung und Halterung des Einsatzes und eine stoffreine Wiederverwertung des Kochgeschirrs.

Diese Aufgabe wird nach der Erfindung dadurch gelöst, daß als Einsatz ein Ring aus einem ferromagnetischen Stoff in eine Ringnut der Aluminiumbodenplatte eingelassen ist und daß die Ränder der Ringnut als Bördelränder den Ring übergreifen.

Die Erfindung unterscheidet sich insofern vom Stand der Technik, als der als Ring ausgebildete Einsatz innerhalb der in die Bodenplatte eingearbeiteten Nut genau ausgerichtet und durch den Bördelrand festgehalten ist. Trotzdem läßt sich der Ring auch wieder leicht trennen oder auslösen, so daß bei der Aufarbeitung und Wiederverwertung des Kochgeschirrs keine Probleme auftreten. Der Ring stabilisiert die verweiche Bodenplatte und erhöht so die Festigkeit des Kochgeschirrs.

Eine besonders gute magnetische Wechselwirkung erreicht man dadurch, daß der Ring aus Eisenblech besteht. Ein solcher Ring ist preiswert und läßt sich einfach bearbeiten.

Eine stabile und dauerhafte Einbettung des Rings wird dadurch erzielt, daß die Tiefe der Ringnut 20 bis 40 % größer als die Dicke des Rings ist.

Ein Ausführungsbeispiel der Erfindung wird unter Bezugnahme auf die Zeichnung erläutert, in der darstellen:
Fig. 1 einen Schnitt durch eine Pfanne,
Fig. 2 eine Unteransicht zu Fig. 1 und
Fig. 3 eine vergrößerten Ausschnitt III in Fig. 1.

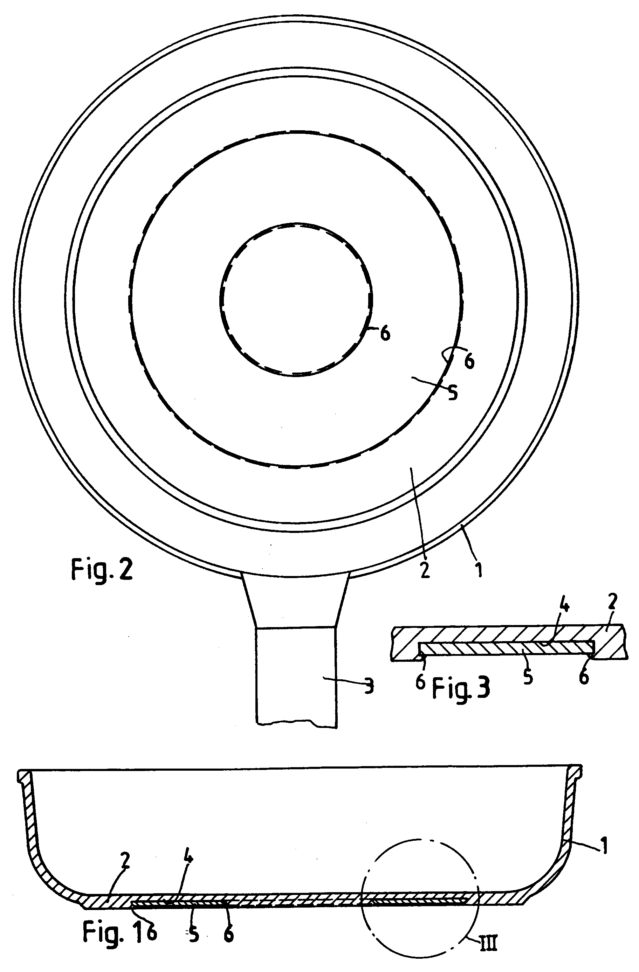

Die Erfindung wird anhand einer Pfanne als Kochgeschirr erläutert. Fig. 1 zeigt einen Schnitt durch eine Pfanne 1 aus Aluminium. Die Pfanne 1 hat eine Aluminiumbodenplatte 2 und einen Griff 3. In der Aluminiumbodenplatte 2 ist eine Ringnut 4 ausgenommen, vorzugsweise spanabhebend geformt.

In die Ringnut 4 ist ein Ring 5 aus Eisenblech eingesetzt. Der Ring ist lackiert. Eisenblech ist ein magnetisierbares Material mit ferromagnetischen Eigenschaften. Es kann also eine Wechselwirkung mit einem Magnetfeld erfolgen. Ein Induktionsfeld bewirkt eine Ewärmung des Rings 5.

Die Ränder der Ringnut 4 sind als Bördelränder 6 über die Kanten des Rings 5 gezogen, so daß der Ring 5 formschlüssig festgehalten ist. Der Ring hat eine Dicke von etwa 1 mm. Die Ringnut hat eine Tiefe bis zu 1,8 mm oder mehr. Die Tiefe der Ringnut ist also 20 bis 40 % größer als die Dicke des Rings. Die Bördelränder 6 sind stabil ausgebildet, so daß ein Abfallen des Rings 5 ausgeschlossen ist.

Der Ring 5 wird auf einem Induktionheizfeld schnell und sicher erwärmt. Die Wärme wird auf den Pfannenboden und die Pfanne übertragen.

## Patentansprüche

1. Kochgeschirr (1) mit einer Aluminiumbodenplatte (2) und einem ferromagnetischen, durch ein Induktionsfeld erhitzbaren Einsatz im Boden, dadurch gekennzeichnet, daß als Einsatz ein Ring (5) aus einem ferromagnetischen Stoff in eine Ringnut (4) der Aluminiumbodenplatte (2) eingelassen ist und daß die Ränder der Ringnut (4) als Bördelränder (6) den Ring (5) übergreifen.

2. Kochgeschirr nach Anspruch 1, dadurch gekennzeichnet, daß der Ring (5) aus Eisenblech besteht.

3. Kochgeschirr nach Anspruch 1 oder 2, dadurch gekennzeichnet, daß die Tiefe der Ringnut (4) 20 bis 40 % größer als die Dicke des Rings (5) ist.

## Claims

1. Cooking vessel (1) comprising a bottom plate made of aluminum and an insert in the bottom plate which consists of a ferromagnetic material and can be heated by an induction field, characterized in that the insert is in the form of a ring (5) made of a ferromagnetic material and is embedded into a ring groove (4) of the bottom plate (2) made of aluminum amd that the edges of the ring groove (4) overlap the ring (5) in the form of beaded edges (6).

2. Cooking vessel according to claim 1, characterized in that the ring (5) consits of sheet iron.

3. Cooking vessel according to claim 1 or 2, characterized in that the depth of the ring groove (4) is between 20 and 40 % greater than the thickness of the ring (5).

## Revendications

1. Récipient de cuisson (1) avec une plaque de base (2) en aluminium et un insert ferromagnétique, chauffé par un champ inducteur, dans la base, caractérisé en ce qu'un anneau (5) en matière ferromagnétique est enchâssé comme un insert dans une rainure (4) annelée de la plaque de base (2) en aluminium et que les bords de la rainure (4) annelée recouvrent l'anneau (5) comme des collets rabattus (6).

2. Récipient de cuisson selon la revendication 1, caractérisé en ce que l'anneau (5) est en tôle de fer.

3. Récipient selon la revendication 1 ou 2, caractérisé en ce que la profondeur de la rainure (4) annelée est de 20 à 40 % plus grande que l'épaisseur de l'anneau (5).
